# EUROPÄISCHE PATENTANMELDUNG

(11) **EP 3 210 726 A1**
(43) Veröffentlichungstag der Anmeldung: **30.08.2017**
(21) Anmeldenummer: 17157430.4
(22) Anmeldetag: 22.02.2017
(51) Int. Cl.: B25F 5/00, B27G 19/02, B24B 55/04, B24B 55/05, B23Q 11/08, B24B 23/00

(54) **WERKZEUGMASCHINE**

(30) Priorität: 23.02.2016 DE 102016103151
(71) Anmelder: Berhalter, Eberhard, 88069 Tettnang (DE)
(72) Erfinder: Berhalter, Eberhard, 88069 Tettnang (DE)
(74) Vertreter: Daub, Thomas

(57) **Zusammenfassung**

Die Erfindung geht aus von einer Werkzeugmaschine, insbesondere tragbare Werkzeugmaschine, mit zumindest einer Auflageeinheit (12), die zumindest eine Auflagefläche (14) zu einer Auflage auf ein zu bearbeitendes Werkstück (40) umfasst, und mit zumindest einer Schutzhaubeneinheit (16), die zumindest ein, insbesondere translatorisch, beweglich gelagertes Schutzhaubenelement (18, 20) aufweist, das zumindest relativ zur Auflageeinheit (12) beweglich ist.

Es wird vorgeschlagen, dass zumindest das Schutzhaubenelement (18) und/oder zumindest ein am Schutzhaubenelement (18) angeordnetes Anlageelement (22) der Schutzhaubeneinheit (16) dazu vorgesehen sind/ist, zumindest teilweise an einer Werkstückoberfläche des zu bearbeitenden Werkstücks (40) anzuliegen.

## Beschreibung

### Stand der Technik

Die Erfindung betrifft eine Werkzeugmaschine nach dem Oberbegriff des Anspruchs 1.

Aus EP 0 119 513 B1 ist bereits eine Werkzeugmaschine, insbesondere eine tragbare Werkzeugmaschine, bekannt, die zumindest eine Auflageeinheit aufweist, welche zumindest eine Auflagefläche zu einer Auflage auf ein zu bearbeitendes Werkstück umfasst, und die zumindest eine Schutzhaubeneinheit aufweist, welche zumindest ein translatorisch beweglich gelagertes Schutzhaubenelement aufweist, das zumindest relativ zur Auflageeinheit beweglich ist.

Die Aufgabe der Erfindung besteht insbesondere darin, eine gattungsgemäße Werkzeugmaschine mit einer vorteilhaften Anlagemöglichkeit der Schutzhaubeneinheit an einem Werkstück bereitzustellen, um beispielsweise eine vorteilhafte Werkstückabtragabsaugung zu erreichen und/oder einen Austritt von Werkstückabtrag bei einer Bearbeitung eines Werkstücks gering zu halten. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Werkzeugmaschine, insbesondere von einer tragbaren Werkzeugmaschine, mit zumindest einer Auflageeinheit, die zumindest eine Auflagefläche zu einer Auflage auf ein zu bearbeitendes Werkstück umfasst, und mit zumindest einer Schutzhaubeneinheit, die zumindest ein, insbesondere translatorisch, beweglich gelagertes Schutzhaubenelement aufweist, das zumindest relativ zur Auflageeinheit beweglich ist.

Es wird vorgeschlagen, dass zumindest das Schutzhaubenelement und/oder zumindest ein am Schutzhaubenelement angeordnetes Anlageelement der Schutzhaubeneinheit dazu vorgesehen sind/ist, zumindest teilweise an einer Werkstückoberfläche des zu bearbeitenden Werkstücks anzuliegen. Vorzugsweise ist das Schutzhaubenelement und/oder das Anlageelement entlang einer zumindest im Wesentlichen quer, insbesondere zumindest im Wesentlichen senkrecht, zu einer Auflagefläche der Auflageeinheit verlaufenden Richtung relativ zur Auflageeinheit beweglich gelagert. Der Ausdruck "beweglich gelagert" soll hier insbesondere eine Lagerung einer Einheit und/oder eines Elements definieren, wobei die Einheit und/oder das Element, insbesondere entkoppelt von einer elastischen Verformung der Einheit und/oder des Elements, eine Bewegungsmöglichkeit entlang zumindest einer Strecke größer als 5 mm, bevorzugt größer als 10 mm und besonders bevorzugt größer als 20 mm aufweist und/oder eine Bewegungsmöglichkeit um zumindest eine Achse um einen Winkel größer als 5°, bevorzugt größer als 10° und besonders bevorzugt größer als 15° aufweist. Unter "im Wesentlichen quer" soll hier insbesondere eine Ausrichtung einer Richtung und/oder einer Achse relativ zu einer Bezugsrichtung und/oder einer Bezugsachse verstanden werden, wobei die Ausrichtung der Richtung und/oder der Achse zumindest verschieden von einer zumindest im Wesentlichen parallelen Ausrichtung zur Bezugsrichtung und/oder zur Bezugsachse ist und insbesondere windschief oder senkrecht zur Bezugsrichtung und/oder zur Bezugsachse ist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Bevorzugt sind/ist das Schutzhaubenelement und/oder das Anlageelement zumindest translatorisch beweglich relativ zur Auflageeinheit gelagert. Es ist jedoch auch denkbar, dass das Schutzhaubenelement und/oder das Anlageelement alternativ oder zusätzlich rotatorisch beweglich relativ zur Auflageeinheit gelagert sind/ist. Es ist denkbar, dass das Anlageelement lediglich an einer Seite des Schutzhaubenelements angeordnet ist, so dass beispielsweise das Anlageelement zusammen mit einer weiteren Seite, insbesondere mit einer Kante, des Schutzhaubenelements an einer Werkstückoberfläche eines zu bearbeitenden Werkstücks anlegbar ist, insbesondere infolge eines lagerungsbedingten Spiels des Schutzhaubenelements. Es ist jedoch auch denkbar, dass lediglich das Schutzhaubenelement derart beweglich gelagert ist oder in seiner Bewegung derart begrenzt ist, dass lediglich das Anlageelement an einer Werkstückoberfläche eines zu bearbeitenden Werkstücks anlegbar ist. Das Anlageelement kann beweglich, federelastisch oder starr am Schutzhaubenelement angeordnet sein. Das Schutzhaubenelement und das Anlageelement können getrennte Bauteile sein oder einteilig miteinander ausgebildet sein. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Auch denkbar ist, dass die Schutzhaubeneinheit entkoppelt von dem Anlageelement ausgebildet ist und lediglich das Schutzhaubenelement zumindest teilweise an einer Werkstückoberfläche eines zu bearbeitenden Werkstücks anlegbar ist, insbesondere infolge einer Bewegung des Schutzhaubenelements relativ zur Auflageeinheit.

Unter einer "Auflageeinheit" soll hier insbesondere eine Einheit verstanden werden, die während einer Bearbeitung eines Werkstücks mittels der Werkzeugmaschine zumindest teilweise auf dem Werkstück aufliegt, insbesondere mit der Auflagefläche der Auflageeinheit oder mit zumindest einem Wälzelement der Auflageeinheit. Besonders bevorzugt ist die Auflageeinheit als Gleitschuh und/oder als Grundplatte ausgebildet. Die Auflageeinheit kann zumindest ein Wälzelement und/oder zumindest ein Gleitelement aufweisen. Vorzugsweise ist das zumindest eine Wälzelement dazu vorgesehen, während einer Auflage der Auflageeinheit auf dem Werkstück auf einer Werkstückoberfläche des Werkstücks zu wälzen. Insbesondere ist das zumindest eine Gleitelement dazu vorgesehen, während einer Auflage der Auflageeinheit auf einem Werkstück auf einer Werkstückoberfläche des Werkstücks zu gleiten. Die Auflageeinheit kann beispielsweise ein als beschichtete Auflagefläche ausgebildetes Gleitelement aufweisen, das dazu vorgesehen ist, während einer Bearbeitung eines Werkstücks mittels der Werkzeugmaschine auf einer Werkstückoberfläche eines Werkstücks zu gleiten. Weitere, einem Fachmann als sinnvoll erscheinende Ausgestaltungen der Auflageeinheit sind ebenfalls denkbar.

Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Die Werkzeugmaschine, insbesondere die tragbare Werkzeugmaschine, kann als Kreissäge, als Tauchkreissäge, als Oberfräse, als Schlitzfräse oder als andere, einem Fachmann als sinnvolle erscheinende Werkzeugmaschine, insbesondere tragbare Werkzeugmaschine ausgebildet sein.

Mittels der erfindungsgemäßen Ausgestaltung kann vorteilhaft ein Spalt zwischen dem Schutzhaubenelement und/oder dem Anlageelement sowie einer Werkstückoberfläche eines zu bearbeitenden Werkstücks bei einer Bearbeitung eines Werkstücks mittels der erfindungsgemäßen Werkzeugmaschine gering gehalten werden. Es kann eine vorteilhafte Werkstückabtragabsaugung erreicht werden. Es kann vorteilhaft ein Austritt von Werkstückabtrag bei einer Bearbeitung eines Werkstücks mittels der erfindungsgemäßen Werkzeugmaschine gering gehalten werden.

Des Weiteren wird vorgeschlagen, dass zumindest das Schutzhaubenelement und/oder zumindest das Anlageelement sich in zumindest einem Zustand zumindest teilweise über die Auflagefläche der Auflageeinheit hinweg erstrecken/erstreckt. Vorzugsweise können/kann sich das Schutzhaubenelement und/oder das Anlageelement zumindest zu mehr als 0,1 mm, bevorzugt zu mehr als 1 mm und besonders bevorzugt zu mehr als 5 mm über die Auflagefläche der Auflageeinheit hinweg erstrecken, insbesondere infolge einer beweglichen Lagerung des Schutzhaubenelements und/oder des Anlageelements relativ zur Auflageeinheit. Insbesondere erstrecken/erstreckt sich das Schutzhaubenelement und/oder das Anlageelement in zumindest einem Zustand entlang einer zumindest im Wesentlichen quer, insbesondere zumindest im Wesentlichen senkrecht, zur Auflagefläche der Auflageeinheit verlaufenden Richtung über die Auflagefläche der Auflageeinheit hinweg. Bevorzugt erstrecken/erstreckt sich das Schutzhaubenelement und/oder das Anlageelement in zumindest einem Zustand auf einer einer Gehäuseeinheit der Werkzeugmaschine abgewandten Seite der Auflageeinheit über die Auflagefläche der Auflageeinheit hinweg. Es kann vorteilhaft mittels des Schutzhaubenelements und/oder mittels des Anlageelements ein Ausgleich von Unebenheiten in einer Werkstückoberfläche eines zu bearbeitenden Werkstücks infolge einer Bewegung des Schutzhaubenelements und/oder des Anlageelements über die Auflagefläche hinweg erreicht werden.

Ferner wird vorgeschlagen, dass die Schutzhaubeneinheit zumindest ein Reibungsminderungselement aufweist, das am Schutzhaubenelement und/oder am Anlageelement angeordnet ist. Das Reibungsminderungselement kann als Beschichtung, wie beispielsweise als Teflonbeschichtung, als Wälzelement, als Gleitelement o. dgl. ausgebildet sein. Eine Ausgestaltung des Reibungsminderungselements als Borstenelement ist ebenfalls denkbar. Das Reibungsminderungselement kann einteilig mit dem Schutzhaubenelement und/oder mit dem Anlageelement ausgebildet sein. Es ist jedoch auch denkbar, dass das Reibungsminderungselement wechselbar an dem Schutzhaubenelement und/oder an dem Anlageelement anordenbar ist. Weitere, einem Fachmann als sinnvoll erscheinende Ausgestaltungen und/oder Anordnungen des Reibungsminderungselements sind ebenfalls denkbar. Mittels der erfindungsgemäßen Ausgestaltung kann vorteilhaft eine oberflächenschonende Bewegung des Schutzhaubenelements und/oder des Anlageelements auf einer Werkstückoberfläche eines zu bearbeitenden Werkstücks erreicht werden, insbesondere zu einer Realisierung einer vorteilhaften Werkstückabtragabsaugung.

Zudem wird vorgeschlagen, dass das Anlageelement sich entlang einer Bewegungsrichtung des Schutzhaubenelements in zumindest einem Zustand zumindest teilweise über einen Begrenzungsrand des Schutzhaubenelements hinweg erstreckt, wobei der Begrenzungsrand zumindest teilweise eine Werkzeugaustrittsöffnung des Schutzhaubenelements begrenzt. Bevorzugt ist das Anlageelement separat vom Schutzhaubenelement ausgebildet und am Schutzhaubenelement angeordnet, insbesondere fixiert. Vorzugsweise erstreckt sich das Anlageelement zumindest zu mehr als 0,1 mm, bevorzugt zu mehr als 1 mm und besonders bevorzugt zu mehr als 2 mm über den Begrenzungsrand des Schutzhaubenelements hinweg. Insbesondere erstreckt sich das Anlageelement zumindest entlang einer zumindest im Wesentlichen quer, insbesondere zumindest im Wesentlichen senkrecht, zur Auflagefläche der Auflageeinheit verlaufenden Richtung über den Begrenzungsrand des Schutzhaubenelements hinweg. Bevorzugt erstreckt sich das Anlageelement entlang einer zumindest im Wesentlichen parallel zu einer Bewegungsachse des Schutzhaubenelements und/oder des Anlageelements verlaufenden Richtung über den Begrenzungsrand des Schutzhaubenelements hinweg. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Mittels der erfindungsgemäßen Ausgestaltung kann vorteilhaft eine Anlage des Anlageelements an einer Werkstückoberfläche eines zu bearbeitenden Werkstücks zuverlässig ermöglicht werden.

Des Weiteren wird vorgeschlagen, dass die Werkzeugmaschine zumindest eine Antriebseinheit umfasst, wobei das Anlageelement an einer der Antriebseinheit abgewandten Seite des Schutzhaubenelements am Schutzhaubenelement angeordnet ist. Die Antriebseinheit ist vorzugsweise als Elektromotoreinheit ausgebildet. Es ist jedoch auch denkbar, dass die Antriebseinheit eine andere, einem Fachmann als sinnvoll erscheinende Ausgestaltung aufweist, wie beispielsweise eine Ausgestaltung als Hybridmotoreinheit, als Verbrennungsmotoreinheit o. dgl. Das Anlageelement kann beispielsweise als eine Kunststofflippe, eine Gummilippe o. dgl. ausgebildet sein, die am Begrenzungsrand des Schutzhaubenelements angeordnet ist. Mittels der erfindungsgemäßen Ausgestaltung kann vorteilhaft eine zuverlässige Anlage des Anlageelements an einer Werkstückoberfläche eines zu bearbeitenden Werkstücks bei einer Bearbeitung des Werkstücks mittels der Werkzeugmaschine erreicht werden.

Ferner wird vorgeschlagen, dass sich das Anlageelement entlang eines zumindest im Wesentlichen gesamten Begrenzungsrands des Schutzhaubenelements erstreckt. Vorzugsweise erstreckt sich das Anlageelement zu mehr als 50 %, bevorzugt zu mehr als 70 % und besonders bevorzugt zu mehr als 90 % entlang einer maximalen Gesamterstreckung des Begrenzungsrands des Schutzhaubenelements. Mittels der erfindungsgemäßen Ausgestaltung kann vorteilhaft eine großflächige Anlage des Anlageelements an einer Werkstückoberfläche eines zu bearbeitenden Werkstücks erreicht werden, um eine vorteilhafte Abdichtung zwischen dem Schutzhaubenelement und dem Werkstück zu ermöglichen.

Zudem wird vorgeschlagen, dass das Anlageelement beweglich an dem Schutzhaubenelement gelagert ist. Vorzugsweise ist das Anlageelement relativ zum Schutzhaubenelement beweglich am Schutzhaubenelement gelagert. Es ist denkbar, dass das Anlageelement infolge einer Werkstoffeigenschaft, infolge einer geometrischen Ausgestaltung und/oder infolge einer mechanischen oder magnetischen Lagerung beweglich am Schutzhaubenelement gelagert ist. Mittels der erfindungsgemäßen Ausgestaltung kann vorteilhaft eine zuverlässige Anlagemöglichkeit des Anlageelements an einer Werkstückoberfläche eines zu bearbeitenden Werkstücks erreicht werden.

Des Weiteren wird vorgeschlagen, dass das Anlageelement aus einem Werkstoff gebildet ist, der verschieden ist von einem Werkstoff, aus dem das Schutzhaubenelement gebildet ist. Es ist jedoch auch denkbar, dass das Anlageelement und das Schutzhaubenelement in einer alternativen Ausgestaltung der Werkzeugmaschine werkstoffgleich ausgebildet sind. Das Schutzhaubenelement ist vorzugsweise aus einem metallischen Werkstoff gebildet. Das Anlageelement kann beispielsweise aus einem Kunststoff, aus einem Elastomer, aus einem metallischen Werkstoff, aus einer Legierung o. dgl. gebildet sein. Mittels der erfindungsgemäßen Ausgestaltung kann vorteilhaft ein widerstandsfähiges Schutzhaubenelement und zugleich eine vorteilhafte Anlagemöglichkeit an einer Werkstückoberfläche eines zu bearbeitenden Werkstücks erreicht werden.

Ferner wird vorgeschlagen, dass das Anlageelement federelastisch ausgebildet ist. Eine federelastische Ausgestaltung des Anlageelements kann durch eine Werkstoffeigenschaft erreicht werden und/oder durch eine Geometrie des Anlageelements. Das Anlageelement ist vorzugsweise aus einem Federstahl, aus einem Kunststoff o. dgl. gebildet. Mittels der erfindungsgemäßen Ausgestaltung kann vorteilhaft eine konstruktiv einfache Ausgleichsmöglichkeit von Unebenheiten in einer Werkstückoberfläche eines Werkstücks bei einer Bearbeitung des Werkstücks mit der erfindungsgemäßen Werkzeugmaschine realisiert werden.

Zudem wird vorgeschlagen, dass die Schutzhaubeneinheit zumindest ein Federelement umfasst, das dazu vorgesehen ist, zumindest das Schutzhaubenelement und/oder das Anlageelement mit einer Federkraft zu beaufschlagen. Unter einem "Federelement" soll insbesondere ein makroskopisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Das Federelement ist vorzugsweise als Druckfeder, insbesondere als Schraubendruckfeder, ausgebildet. Es ist jedoch auch denkbar, dass das Federelement eine andere, einem Fachmann als sinnvoll erscheinende Ausgestaltung aufweist, wie beispielsweise eine Ausgestaltung als Zugfeder, als Evolutfeder, als Schenkelfeder, als Gasdruckfeder, als Tellerfeder, als Spiralfeder o. dgl. Das Federelement kann bei einer Anordnung des Anlageelements am Schutzhaubenelement lediglich auf das Schutzhaubenelement einwirken oder die Schutzhaubeneinheit umfasst zumindest zwei Federelemente, wobei eines der Federelemente das Schutzhaubenelement mit einer Federkraft beaufschlagt und eines der Federelemente das Anlageelement mit einer Federkraft beaufschlagt. Weitere, einem Fachmann als sinnvoll erscheinende Ausgestaltungen sind ebenfalls denkbar. Mittels der erfindungsgemäßen Ausgestaltung kann vorteilhaft eine Beaufschlagung des Schutzhaubenelements und/oder des Anlageelements mit einer Federkraft in Richtung einer Werkstückoberfläche eines zu bearbeitenden Werkstücks bei einer Bearbeitung des Werkstücks mit einer erfindungsgemäßen Werkzeugmaschine erreicht werden.

Die erfindungsgemäße Werkzeugmaschine soll hierbei nicht auf die oben beschriebene Anwendung und Ausführungsform beschränkt sein. Insbesondere kann die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenvorrichtung in einer schematischen Darstellung,
- Fig. 2: eine weitere Ansicht der erfindungsgemäßen Werkzeugmaschine in einer schematischen Darstellung,
- Fig. 3: eine Detailansicht einer Übersetzungseinheit der erfindungsgemäßen Werkzeugmaschinenvorrichtung, wobei ein Teil einer Schutzhaubeneinheit der Werkzeugmaschine abgenommen ist, in einer schematischen Darstellung,
- Fig. 4: eine weitere Detailansicht der Übersetzungseinheit in einer schematischen Darstellung,
- Fig. 5: eine Detailansicht eines an einem Schutzhaubenelement einer Schutzhaubeneinheit der erfindungsgemäßen Werkzeugmaschine angeordnetes Anlageelement in einer schematischen Darstellung,
- Fig. 6: eine Detailansicht einer Lagereinheit der erfindungsgemäßen Werkzeugmaschine zu einer beweglichen Lagerung des Schutzhaubenelements in einer schematischen Darstellung und
- Fig. 7: eine Detailansicht des Schutzhaubenelements, an dem das Anlageelement angeordnet ist, in einer schematischen Darstellung

### Beschreibung des Ausführungsbeispiels

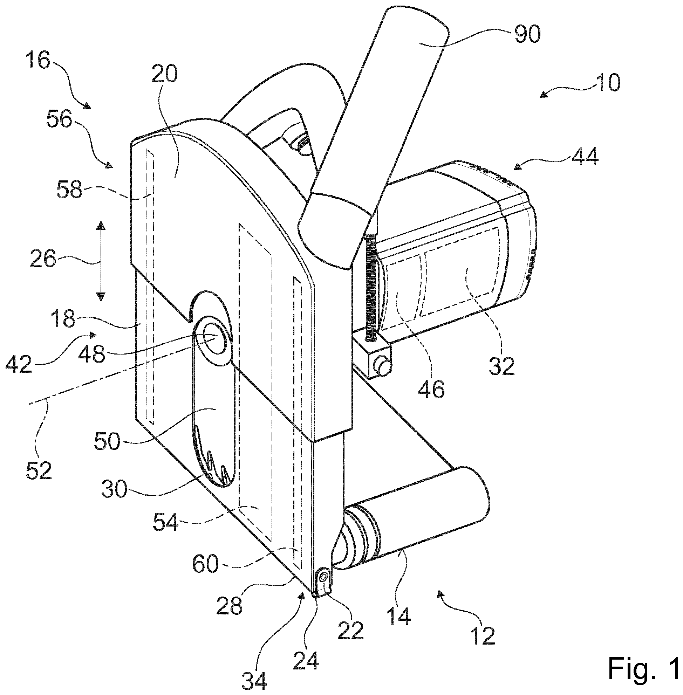

Fig. 1 zeigt eine Werkzeugmaschine 10 mit zumindest einer Auflageeinheit 12, die zumindest eine Auflagefläche 14 zu einer Auflage auf ein zu bearbeitendes Werkstück 40 umfasst, und mit zumindest einer Schutzhaubeneinheit 16, die zumindest ein, insbesondere translatorisch, beweglich gelagertes Schutzhaubenelement 18, 20 aufweist, das zumindest relativ zur Auflageeinheit 12 beweglich ist. Die Werkzeugmaschine 10 ist als tragbare Werkzeugmaschine ausgebildet. Die Werkzeugmaschine 10 ist in dem in Figur 1 gezeigten Ausführungsbeispiel als Handkreissäge, insbesondere Tauchhandkreissäge, ausgebildet. Es ist jedoch auch denkbar, dass die Werkzeugmaschine 10 eine andere, einem Fachmann als sinnvoll erscheinende Ausgestaltung aufweist, wie beispielsweise eine Ausgestaltung als Oberfräse, als Schlitzfräse o. dgl. Die Werkzeugmaschine 10 weist eine Gehäuseeinheit 44 auf. Die Gehäuseeinheit 44 ist dazu vorgesehen, zumindest eine Antriebseinheit 32 der Werkzeugmaschine 10 aufzunehmen und/oder zu lagern. Die Gehäuseeinheit 44 kann als Kunststoffgehäuseeinheit, als Metallgehäuseeinheit, als Topfgehäuseeinheit, als Schalengehäuseeinheit, als Kombination aus einer der genannten Gehäuseeinheiten oder als eine andere, einem Fachmann als sinnvoll erscheinende Gehäuseeinheit ausgebildet sein. Die Gehäuseeinheit 44 ist, insbesondere translatorisch, beweglich an der Auflageeinheit 12 gelagert, insbesondere zumindest zusammen mit einer Werkzeugeinheit 42 der Werkzeugmaschine 10 und/oder zumindest zusammen mit der Antriebseinheit 32.

Die Antriebseinheit 32 ist insbesondere als Elektromotoreinheit ausgebildet. Es ist jedoch auch denkbar, dass die Antriebseinheit 32 eine andere, einem Fachmann als sinnvoll erscheinende Ausgestaltung aufweist, wie beispielsweise eine Ausgestaltung als Hybridantriebseinheit, als Verbrennungsantriebseinheit o. dgl. Die Werkzeugmaschine 10 umfasst zumindest eine Getriebeeinheit 46. Die Getriebeeinheit 46 ist in der Gehäuseeinheit 44 angeordnet, insbesondere gelagert. Die Antriebseinheit 32 und die Getriebeeinheit 46 sind vorzugsweise dazu vorgesehen, auf eine, einem Fachmann bereits bekannte Art und Weise die Werkzeugeinheit 42, insbesondere eine Werkzeugaufnahme 48 der Werkzeugeinheit 42, anzutreiben, insbesondere rotierend anzutreiben. Es ist jedoch auch denkbar, dass die Werkzeugmaschine 10 in einer alternativen Ausgestaltung entkoppelt von der Getriebeeinheit 46 ausgebildet ist und die Werkzeugeinheit 42 im Wesentlichen direkt mittels der Antriebseinheit 32 antreibbar ist.

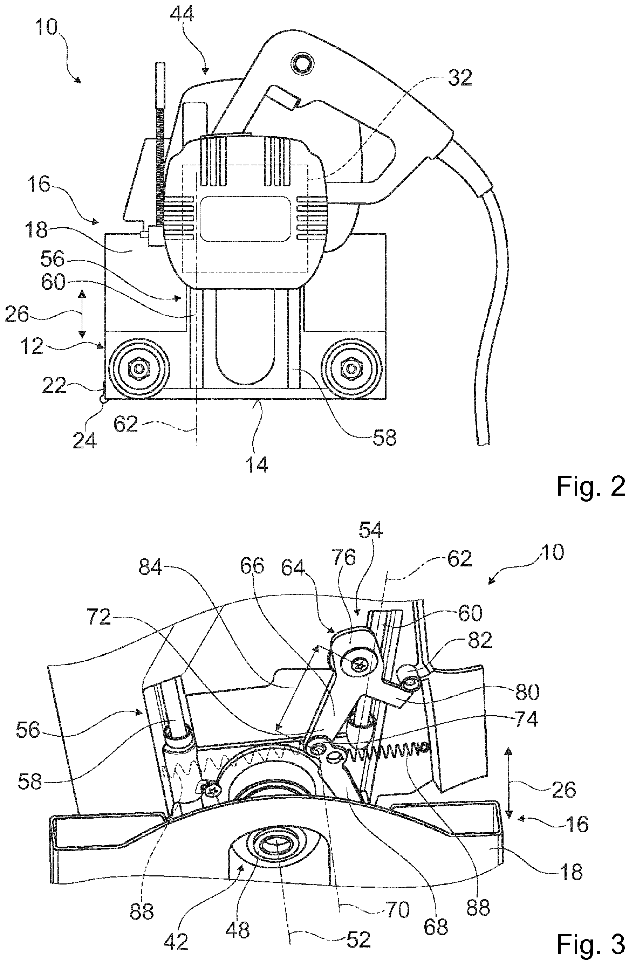

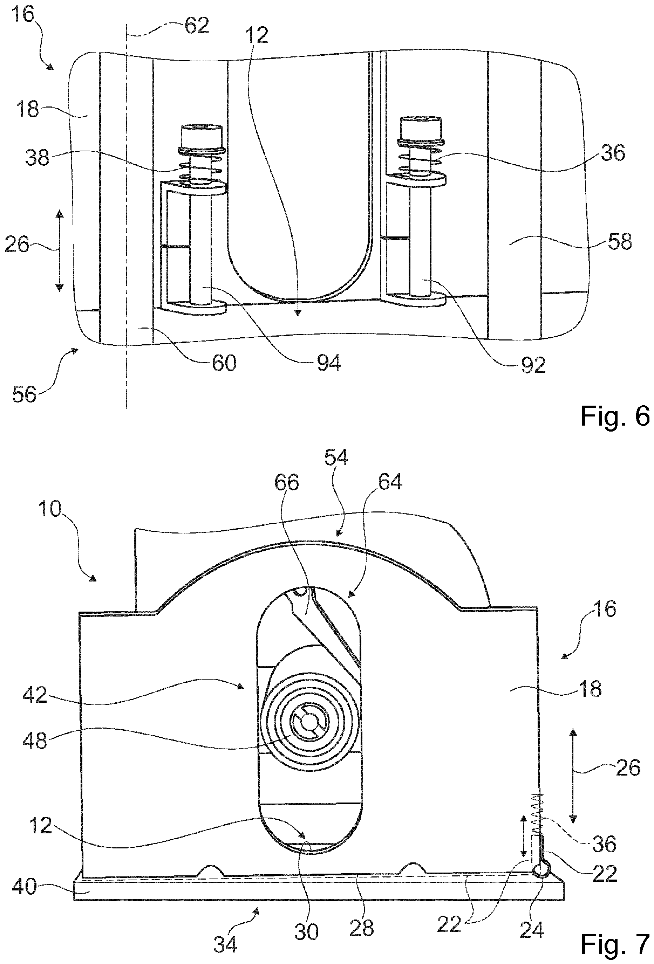

Die Werkzeugeinheit 42 umfasst vorzugsweise zumindest die Werkzeugaufnahme 48 zu einer Aufnahme und/oder zu einer Fixierung eines Einsatzwerkzeugs 50. Das Einsatzwerkzeug 50 ist in dem in Figur 1 dargestellten Ausführungsbeispiel als Sägeblatt, insbesondere als Kreissägeblatt, ausgebildet. Die Werkzeugaufnahme 48 ist drehbar gelagert, insbesondere in der Gehäuseeinheit 44. Die Werkzeugaufnahme 48 weist bevorzugt zu einer Aufnahme und/oder zu einer Fixierung des Einsatzwerkzeugs 50 eine, einem Fachmann bereits bekannte Ausgestaltung auf, wie beispielsweise eine Ausgestaltung als Spannzange, als Werkzeugfutter, als Schraubverbindung, als Schnellwechselfutter o. dgl. Eine Rotationsachse 52 der Werkzeugaufnahme 48 verläuft insbesondere zumindest im Wesentlichen parallel zur Auflagefläche 14 der Auflageeinheit 12. Die Auflageeinheit 12 liegt zumindest in einem Betriebszustand mit der Auflagefläche 14 der Auflageeinheit 12 auf einem zu bearbeitenden Werkstück 40 auf (Figuren 2 und 7). Die Auflageeinheit 12 ist vorzugsweise als Gleitschuh und/oder als Grundplatte ausgebildet.

Die Werkzeugmaschine 10 umfasst zumindest eine Werkzeugmaschinenvorrichtung 54 zu einer Unterstützung einer Bewegung, insbesondere einer Hubbewegung, der Gehäuseeinheit 44 und/oder der Werkzeugeinheit 42 relativ zur Auflageeinheit 12. Die Werkzeugmaschinenvorrichtung 54 ist vorzugsweise zumindest teilweise an der Auflageeinheit 12 angeordnet (Figur 2). Die Werkzeugmaschinenvorrichtung 54 ist insbesondere als Handwerkzeugmaschinenvorrichtung ausgebildet. Die Werkzeugmaschinenvorrichtung 54 umfasst zumindest eine Führungseinheit 56, insbesondere einer Linearführungseinheit, zu einer Führung der Gehäuseeinheit 44 und/oder der Werkzeugeinheit 42 bei einer Bewegung relativ zur Auflageeinheit 12. Die Führungseinheit 56 umfasst zumindest ein Führungselement 58, 60 (Figuren 2 und 3). Das zumindest eine Führungselement 58, 60 ist als Linearführungselement ausgebildet, insbesondere als Führungsstange. Das zumindest eine Führungselement 58, 60 ist mit zumindest einem Ende an der Auflageeinheit 12 angeordnet, insbesondere fixiert. Das zumindest eine Führungselement 58, 60 ist mit zumindest einem weiteren Ende in einer Ausnehmung der Gehäuseeinheit 44 angeordnet. Die Gehäuseeinheit 44 ist vorzugsweise entlang des zumindest einen Führungselement 58, 60 translatorisch relativ zur Auflageeinheit 12 beweglich gelagert. Vorzugsweise umfasst die Führungseinheit 56 zumindest zwei Führungselemente 58, 60, die eine zumindest im Wesentlichen analoge Ausgestaltung aufweisen. Es ist jedoch auch denkbar, dass die Führungseinheit 56 eine von zwei abweichende Anzahl an Führungselementen 58, 60 aufweist. Zumindest eine Führungsachse 62 der Führungseinheit 56, insbesondere zumindest eines der Führungselemente 58, 60, verläuft vorzugsweise zumindest im Wesentlichen senkrecht zur Auflagefläche 14 der Auflageeinheit 12.

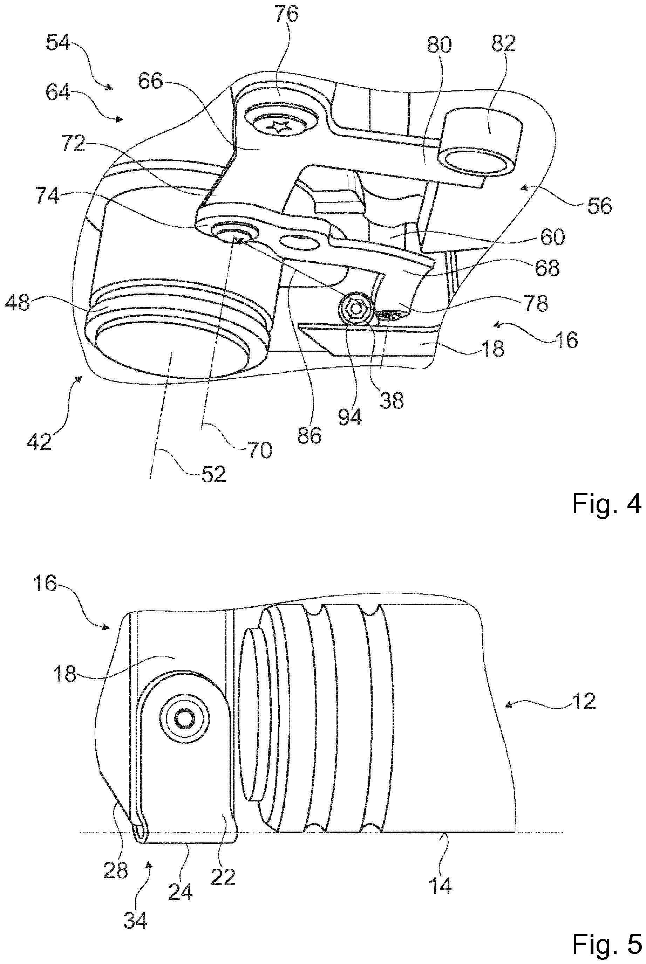

Die Werkzeugmaschinenvorrichtung 54 umfasst zumindest eine Übersetzungseinheit 64, die dazu vorgesehen ist, zumindest in Abhängigkeit von einer Bewegungsstrecke der Gehäuseeinheit 44 und/oder der Werkzeugeinheit 42 relativ zur Auflageeinheit 12 zumindest eine Kraftübersetzung zu ändern (Figuren 1 bis 4). Die Übersetzungseinheit 64 weist zumindest ein beweglich gelagertes Hebelelement 66, 68 auf, das dazu vorgesehen ist, zumindest in Abhängigkeit von einer Bewegungstrecke der Gehäuseeinheit 44 und/oder der Werkzeugeinheit 42 relativ zur Auflageeinheit 12 zumindest eine Kraftübersetzung zu ändern. Vorzugsweise umfasst die Übersetzungseinheit 64 zumindest zwei beweglich gelagerte Hebelelemente 66, 68, die zumindest eine gemeinsame Bewegungsachse 70 aufweisen (Figuren 3 und 4). Die Bewegungsachse 70 verläuft insbesondere zumindest im Wesentlichen parallel zur Auflagefläche 14 der Auflageeinheit 12 und/oder zur Rotationsachse 52 der Werkzeugeinheit 42. Die Bewegungsachse 70 bildet insbesondere eine Schwenkachse, um die die zumindest zwei Hebelelemente 66, 68 schwenkbar gelagert sind. Die zumindest zwei Hebelelemente 66, 68 sind insbesondere jeweils mit zumindest einem Ende 72, 74 schwenkbar miteinander verbunden. Eines der zumindest zwei Hebelelemente 66, 68 ist mit einem weiteren Ende 76 schwenkbar an der Gehäuseeinheit 44 angeordnet (Figur 3). Eines der zumindest zwei Hebelelemente 66, 68 ist mit einem weiteren Ende 78 schwenkbar an der Auflageeinheit 12 angeordnet (Figur 4). Das an der Gehäuseeinheit 44 schwenkbar angeordnete Hebelelement 66 weist insbesondere einen Anschlagfortsatz 80 auf, der dazu vorgesehen ist, eine Bewegung, insbesondere eine Schwenkbewegung, des an der Gehäuseeinheit 44 schwenkbar angeordneten Hebelelements 66 zu begrenzen. Der Anschlagfortsatz 80 wirkt zu einer Bewegungsbegrenzung der zumindest zwei Hebelelemente 66, 68 relativ zueinander mit einem an der Gehäuseeinheit 44 angeordneten Anschlagelement 82 zusammen. Die Übersetzungseinheit 64 ist vorzugsweise als Kniehebeleinheit ausgebildet. Eine Ausgestaltung der Übersetzungseinheit 64 mit mehr als zwei Hebelelementen 66, 68 zur Bildung einer Kniehebeleinheit ist ebenfalls denkbar.

Die Übersetzungseinheit 64 weist die zumindest zwei Hebelelemente 66, 67 auf, die unterschiedliche maximale Längserstreckungen 84, 86 aufweisen (Figuren 3 und 4). Vorzugsweise weist das an der Gehäuseeinheit 44 schwenkbar angeordnete Hebelelement 66 eine geringere maximale Längserstreckung 84 auf als eine maximale Längserstreckung 86 des an der Auflageeinheit 12 schwenkbar angeordneten Hebelelements 68. Es ist jedoch auch denkbar, dass das an der Auflageeinheit 12 schwenkbar angeordnete Hebelelement 68 eine geringere maximale Längserstreckung 86 aufweist als eine maximale Längserstreckung 84 des an der Gehäuseeinheit 44 schwenkbar angeordneten Hebelelements 66. Eine Ausgestaltung der zumindest zwei Hebelelemente 66, 68 mit gleichen maximalen Längserstreckungen 84, 86 ist ebenfalls denkbar. Die zumindest zwei Hebelelemente 66, 68 können einen zumindest im Wesentlichen vollständig geradlinige Ausgestaltung, einen abgeknickte Ausgestaltung, eine bogenförmige Ausgestaltung oder eine andere, einem Fachmann als sinnvoll erscheinende Ausgestaltung aufweisen.

Die Übersetzungseinheit 64 weist zumindest ein Federelement 88 auf, das dazu vorgesehen, zumindest eines der Hebelelemente 66, 68 der Übersetzungseinheit 64 mit einer Federkraft zu beaufschlagen (Figur 3). Es ist jedoch auch denkbar, dass die Übersetzungseinheit 64 eine von eins abweichende Anzahl an Federelementen 88 aufweist. Das Federelement 88 ist vorzugsweise dazu vorgesehen, die zumindest zwei Hebelelemente 66, 68 der Übersetzungseinheit 64 mit einer Federkraft zu beaufschlagen. Das Federelement 88 ist insbesondere mit einem Ende in einem Bereich der gemeinsamen Bewegungsachse 70 an zumindest einem der zumindest zwei Hebelelemente 66, 68 angeordnet, insbesondere fixiert. Mit einem weiteren Ende ist das Federelement 88 an der Gehäuseeinheit 44 angeordnet, insbesondere fixiert. Das Federelement 88 ist vorzugsweise dazu vorgesehen, die zumindest zwei Hebelelemente 66, 68 der Übersetzungseinheit 64 mit einer Federkraft entlang einer zumindest im Wesentlichen quer zur Bewegungsachse 70 und/oder zumindest im Wesentlichen quer zur Führungsachse 62 verlaufenden Richtung zu beaufschlagen. Das Federelement 88 ist vorzugsweise dazu vorgesehen, die zumindest zwei Hebelelemente 66, 68 mit einer Federkraft zu beaufschlagen, die eine Bewegung der zumindest zwei Hebelelemente 66, 68 in eine zumindest im Wesentlichen gestreckte Anordnung der zumindest zwei Hebelelemente 66, 68 relativ zueinander bewirkt. Das Federelement 88 kann als Druckfeder, als Zugfeder, als Druckzylinder, wie beispielsweise als Gasdruckfeder o. dgl., oder als ein anderes, einem Fachmann als sinnvoll erscheinendes Element ausgebildet sein. Das Federelement 88 ist vorzugsweise als Schraubenzugfeder oder als Schraubendruckfeder ausgebildet. In Figur 3 ist das Federelement 88 beispielhaft als Schraubenzugfeder dargestellt, wobei eine alternative Ausgestaltung des Federelements 88 als Schraubendruckfeder gestrichelt in Figur 3 dargestellt ist. Das Federelement 88 weist eine lineare oder eine progressive Federkennlinie auf.

Die Werkzeugmaschine 10 weist die Schutzhaubeneinheit 16 auf, die zumindest dazu vorgesehen ist, einen Bediener der Werkzeugmaschine 10 bei einer Bearbeitung eines Werkstücks 40 (Figur 7) vor Verletzungen zu schützen und/oder eine Absaugung von Werkstückpartikeln bei einer Bearbeitung eines Werkstücks 40 zu ermöglichen. Die Schutzhaubeneinheit 16 ist insbesondere zumindest teilweise an der Auflageeinheit 12 angeordnet (Figuren 4, 6 und 7). Die Schutzhaubeneinheit 16 umfasst vorzugsweise zumindest das, insbesondere translatorisch, beweglich gelagerte Schutzhaubenelement 18, 20, das zumindest relativ zur Auflageeinheit 12 beweglich ist (Figur 1). Vorzugsweise umfasst die Schutzhaubeneinheit 16 zumindest ein beweglich an der Auflageeinheit 12 gelagertes Schutzhaubenelement 18 und zumindest ein an der Gehäuseeinheit 44 angeordnetes weiteres Schutzhaubenelement 20. Das weitere Schutzhaubenelement 20 ist zusammen mit der Gehäuseeinheit 44 relativ zum Schutzhaubenelement 18 beweglich. Das weitere Schutzhaubenelement 20 ist vorzugsweise an der Gehäuseeinheit 44 fixiert. Insbesondere übergreift das weitere Schutzhaubenelement 20 das Schutzhaubenelement 18. Das Schutzhaubenelement 18 ist insbesondere bei einer Bewegung zumindest teilweise in das weitere Schutzhaubenelement 20 hineinbewegbar. Das weitere Schutzhaubenelement 20 umfasst vorzugsweise zumindest einen Absauganschlussstutzen 90 zu einer Verbindung mit einer externen Absaugvorrichtung (hier nicht näher dargestellt). Insbesondere sind/ist zumindest das Schutzhaubenelement 18 und/oder zumindest ein am Schutzhaubenelement 18 angeordnetes Anlageelement 22 der Schutzhaubeneinheit 16 dazu vorgesehen, zumindest teilweise an einer Werkstückoberfläche eines zu bearbeitenden Werkstücks 40 (Figur 7) anzuliegen. Das Anlageelement 22 ist bevorzugt aus einem Werkstoff gebildet, der verschieden ist von einem Werkstoff, aus dem das Schutzhaubenelement 18 gebildet ist. Es ist jedoch auch denkbar, dass das Anlageelement 22 und das Schutzhaubenelement 18 werkstoffgleich ausgebildet sind.

Vorzugsweise erstrecken/erstreckt sich zumindest das Schutzhaubenelement 18 und/oder zumindest das Anlageelement 22 in zumindest einem Zustand zumindest teilweise über die Auflagefläche 14 der Auflageeinheit 12 hinweg (Figur 5). Das Anlageelement 22 erstreckt sich entlang einer Bewegungsrichtung 26 des Schutzhaubenelements 18 in zumindest einem Zustand zumindest teilweise über einen Begrenzungsrand 28 des Schutzhaubenelements 18 hinweg, wobei der Begrenzungsrand 28 zumindest teilweise eine Werkzeugaustrittsöffnung 30 des Schutzhaubenelements 18 begrenzt (Figuren 5 und 7). Es ist denkbar, dass sich das Anlageelement 22 teilweise oder vollständig entlang des zumindest im Wesentlichen gesamten Begrenzungsrands 28 des Schutzhaubenelements 18 erstreckt (in Figur 7 gestrichelt dargestellt). Insbesondere bei einer Anordnung des Anlageelements 22 entlang des zumindest im Wesentlichen gesamten Begrenzungsrands 28 des Schutzhaubenelements 18 ist das Anlageelement 22 an einer der Antriebseinheit 32 abgewandten Seite 34 des Schutzhaubenelements 18 am Schutzhaubenelement 18 angeordnet.

Das Anlageelement 22 kann beweglich an dem Schutzhaubenelement 18 gelagert sein (in Figur 5 gestrichelt dargestellt) oder zumindest im Wesentlichen ortsfest an dem Schutzhaubenelement 18 fixiert sein. Vorzugsweise ist das Anlageelement 22 federelastisch ausgebildet. Die Schutzhaubeneinheit 16 umfasst zumindest ein Federelement 36, 38, das dazu vorgesehen ist, zumindest das Schutzhaubenelement 18 und/oder das Anlageelement 22 mit einer Federkraft zu beaufschlagen (Figur 6). Insbesondere ist das zumindest eine Federelement 36, 38 an einem Lagerelement 92, 94 der Schutzhaubeneinheit 16 angeordnet, das zumindest zu einer Führung des Schutzhaubenelements 18 vorgesehen ist. Die Schutzhaubeneinheit 16 umfasst bevorzugt zumindest zwei Federelemente 36, 38, die dazu vorgesehen sind, zumindest das Schutzhaubenelement 18 und/oder das Anlageelement 22 mit einer Federkraft zu beaufschlagen. Es ist jedoch auch denkbar, dass die Schutzhaubeneinheit 16 eine von zwei abweichende Anzahl an Federelementen 36, 38 umfasst, die dazu vorgesehen ist, zumindest das Schutzhaubenelement 18 und/oder das Anlageelement 22 mit einer Federkraft zu beaufschlagen. Jedes der zumindest zwei Federelemente 36, 38 ist bevorzugt jeweils an einem der Lagerelemente 92, 94 der Schutzhaubeneinheit 16 angeordnet, das zumindest zu einer Führung des Schutzhaubenelements 18 vorgesehen ist. Es ist jedoch auch denkbar, dass zumindest eines der Federelemente 36, 38 zu einer Beaufschlagung des Schutzhaubenelements 18 mit einer Federkraft vorgesehen ist und eines der Federelemente 36, 38 zu einer Beaufschlagung des Anlageelements 22 mit einer Federkraft vorgesehen ist, insbesondere bei einer beweglichen Lagerung des Anlageelements 22 am Schutzhaubenelement 18.

Die Schutzhaubeneinheit 16 weist zumindest ein Reibungsminderungselement 24 auf, das am Schutzhaubenelement 18 und/oder am Anlageelement 22 angeordnet ist. Das Reibungsminderungselement 24 kann als Beschichtung, wie beispielsweise als Teflonbeschichtung, als Wälzelement, als Gleitelement o. dgl. ausgebildet sein. Vorzugsweise ist das Reibungsminderungselement 24 an der der Antriebseinheit 32 abgewandten Seite 34 des Schutzhaubenelements 18 am Schutzhaubenelement 18 und/oder am Anlageelement 22 angeordnet. Eine Ausgestaltung des Reibungsminderungselements 24 als Borstenelement ist ebenfalls denkbar. Das Reibungsminderungselement 24 kann einteilig mit dem Schutzhaubenelement 18 und/oder mit dem Anlageelement 22 ausgebildet sein. Es ist jedoch auch denkbar, dass das Reibungsminderungselement 24 wechselbar an dem Schutzhaubenelement 18 und/oder an dem Anlageelement 22 anordenbar ist. Weitere, einem Fachmann als sinnvoll erscheinende Ausgestaltungen und/oder Anordnungen des Reibungsminderungselements 24 sind ebenfalls denkbar.

### Bezugszeichen

- 10: Werkzeugmaschine
- 12: Auflageeinheit
- 14: Auflagefläche
- 16: Schutzhaubeneinheit
- 18: Schutzhaubenelement
- 20: Schutzhaubenelement
- 22: Anlageelement
- 24: Reibungsminderungselement
- 26: Bewegungsrichtung
- 28: Begrenzungsrand
- 30: Werkzeugaustrittsöffnung
- 32: Antriebseinheit
- 34: Seite
- 36: Federelement
- 38: Federelement
- 40: Werkstück
- 42: Werkzeugeinheit
- 44: Gehäuseeinheit
- 46: Getriebeeinheit
- 48: Werkzeugaufnahme
- 50: Einsatzwerkzeug
- 52: Rotationsachse
- 54: Werkzeugmaschinenvorrichtung
- 56: Führungseinheit
- 58: Führungselement
- 60: Führungselement
- 62: Führungsachse
- 64: Übersetzungseinheit
- 66: Hebelelement
- 68: Hebelelement
- 70: Bewegungsachse
- 72: Ende
- 74: Ende
- 76: Ende
- 78: Ende
- 80: Anschlagfortsatz
- 82: Anschlagelement
- 84: Längserstreckung
- 86: Längserstreckung
- 88: Federelement
- 90: Absauganschlussstutzen
- 92: Lagerelement
- 94: Lagerelement

## Patentansprüche

1. Werkzeugmaschine, insbesondere tragbare Werkzeugmaschine, mit zumindest einer Auflageeinheit (12), die zumindest eine Auflagefläche (14) zu einer Auflage auf ein zu bearbeitendes Werkstück (40) umfasst, und mit zumindest einer Schutzhaubeneinheit (16), die zumindest ein, insbesondere translatorisch, beweglich gelagertes Schutzhaubenelement (18, 20) aufweist, das zumindest relativ zur Auflageeinheit (12) beweglich ist, **dadurch gekennzeichnet, dass** zumindest das Schutzhaubenelement (18) und/oder zumindest ein am Schutzhaubenelement (18) angeordnetes Anlageelement (22) der Schutzhaubeneinheit (16) dazu vorgesehen sind/ist, zumindest teilweise an einer Werkstückoberfläche des zu bearbeitenden Werkstücks (40) anzuliegen.

2. Werkzeugmaschine nach Anspruch 1, **dadurch gekennzeichnet, dass** zumindest das Schutzhaubenelement (18) und/oder zumindest das Anlageelement (22) sich in zumindest einem Zustand zumindest teilweise über die Auflagefläche (14) der Auflageeinheit (12) hinweg erstrecken/erstreckt.

3. Werkzeugmaschine nach Anspruch 1 oder 2, **dadurch gekennzeichnet, dass** die Schutzhaubeneinheit (16) zumindest ein Reibungsminderungselement (24) aufweist, das am Schutzhaubenelement (18) und/oder am Anlageelement (22) angeordnet ist.

4. Werkzeugmaschine nach einem der vorhergehenden Ansprüche, **dadurch gekennzeichnet, dass** das Anlageelement (22) sich entlang einer Bewegungsrichtung (26) des Schutzhaubenelements (18) in zumindest einem Zustand zumindest teilweise über einen Begrenzungsrand (28) des Schutzhaubenelements (18) hinweg erstreckt, wobei der Begrenzungsrand (28) zumindest teilweise eine Werkzeugaustrittsöffnung (30) des Schutzhaubenelements (18) begrenzt.

5. Werkzeugmaschine nach einem der vorhergehenden Ansprüche, **gekennzeichnet durch** zumindest eine Antriebseinheit (32), wobei das Anlageelement (22) an einer der Antriebseinheit (32) abgewandten Seite (34) des Schutzhaubenelements (18) am Schutzhaubenelement (18) angeordnet ist.

6. Werkzeugmaschine nach Anspruch 5, **dadurch gekennzeichnet, dass** sich das Anlageelement (22) entlang eines zumindest im Wesentlichen gesamten Begrenzungsrands (28) des Schutzhaubenelements (18) erstreckt.

7. Werkzeugmaschine nach einem der vorhergehenden Ansprüche, **dadurch gekennzeichnet, dass** das Anlageelement (22) beweglich an dem Schutzhaubenelement (18) gelagert ist.

8. Werkzeugmaschine nach einem der vorhergehenden Ansprüche, **dadurch gekennzeichnet, dass** das Anlageelement (22) aus einem Werkstoff gebildet ist, der verschieden ist von einem Werkstoff, aus dem das Schutzhaubenelement (18) gebildet ist.

9. Werkzeugmaschine nach einem der vorhergehenden Ansprüche, **dadurch gekennzeichnet, dass** das Anlageelement (22) federelastisch ausgebildet ist.

10. Werkzeugmaschine nach einem der vorhergehenden Ansprüche, **dadurch gekennzeichnet, dass** die Schutzhaubeneinheit (16) zumindest ein Federelement (36, 38) umfasst, das dazu vorgesehen ist, zumindest das Schutzhaubenelement (18) und/oder das Anlageelement (22) mit einer Federkraft zu beaufschlagen.
